# EUROPÄISCHE PATENTSCHRIFT

(11) **EP 1 578 201 B1**
(45) Veröffentlichungstag und Bekanntmachung des Hinweises auf die Patenterteilung: **21.02.2007**
(21) Anmeldenummer: 02798346.9
(22) Anmeldetag: 18.12.2002
(51) Int. Cl.: A22C 9/00

(54) **FLEISCHWALZENANORDNUNG UND VERFAHREN ZUR BEARBEITUNG VON FLEISCH**
MEAT ROLLING DEVICE AND METHOD FOR TREATING MEAT
ENSEMBLE LAMINAGE POUR LA VIANDE ET PROCEDE DE TRAITEMENT DE LA VIANDE

(43) Veröffentlichungstag der Anmeldung: 28.09.2005
(73) Patentinhaber: Kindermann, Franz, 84329 Wurmannsquick (DE)
(72) Erfinder: Kindermann, Franz, 84329 Wurmannsquick (DE)
(74) Vertreter: Rumpler, Wolfgang
(86) Internationale Anmeldenummer: PCT/EP2002/014494
(87) Internationale Veröffentlichungsnummer: WO 2004/054374

(56) Entgegenhaltungen:
- EP-A- 0 930 015
- EP-A- 1 090 554
- US-A- 5 114 379
- US-B1- 6 257 132

## Beschreibung

Die Erfindung betrifft eine Fleischwalzenvorrichtung zum Bearbeiten von Fleischstücken. Die Vorrichtung dient insbesondere zur Mürbung mit gleichzeitiger Flächenvergrößerung von Frischfleisch ohne Knochenanteil im Lebensmittelbereich.

Die Struktur von mit einer derartigen Vorrichtung bearbeiteten Frischfleisch wird nachhaltig verändert beziehungsweise gelockert (gemürbt), und das Fleisch wirkt beim Verzehr zarter und geschmackvoller. Bei Frischfleisch verschiedenster Art, vorwiegend aber Fleisch vom Rind und vom Schwein, wird eine nachhaltige Qualitätsverbesserung erzielt.

Aus der DE A 33 44 284 ist eine Vorrichtung zur Behandlung von Fleisch oder Schinken bekannt, die mit einem Gestell versehen ist, in dem wenigstens zwei gegenläufig rotierende und auf Abstand nebeneinanderliegende Walzen angeordnet sind, zwischen denen das zu behandelnde Gut durchgeführt wird. Die Walzen sind als Druckwalzen ausgebildet und deren Abstand ist zueinander einstellbar. Die Druckwalzen können auswechselbar in dem Gestell befestigt sein, wozu jede Druckwalze auf der Antriebsseite über eine Schnellkupplung mit der Antriebswelle verbunden und auf der anderen Seite in einer lösbar mit dem Gestell verbundenen Lageranordnung gelagert ist. Die Druckwalzen können auf ihren Umfangswänden mit Rippen, Noppen, Vorsprüngen oder dergleichen versehen sein. Die sich wenigstens teilweise über die Länge der Druckwalzen erstreckenden Rippen sind im Querschnitt wenigstens annähernd rechteckig, spitz oder stumpfkegelartig. Der Nachteil dieser Fleischbearbeitungsvorrichtung liegt darin, dass die Fleischzellen des bearbeiteten Fleischstücks durch Quetschen derart zerstört werden, dass sehr viel Zellflüssigkeit austritt und dadurch die Lagerfähigkeit des bearbeiteten Fleischstücks stark abnimmt.

Durch den Walzvorgang kommt es zu einer effektiven Oberflächenvergrößerung des bearbeiteten Fleischstückes (z.B. Schnitzelfleisch vom Schwein, Schweinenackensteaks, Schweinlendchen, Rinderlende u.ä.). Durch den Einsatz einer derartigen Walzvorrichtung bleibt das Fleischklopfen per Hand erspart, bei dem das Frischfleisch durch Schlageinwirkung mit dem entsprechenden Arbeitswerkzeug in seiner Konsistenz geplättet wird. Dabei kommt es zu einem massiven Austritt von Zellflüssigkeit. Dieser Zellflüssigkeitsaustritt führt wiederum zu einem verschmutzten Arbeitsplatz und zu einem messbaren Gewichtsverlust beim bearbeiteten Frischfleisch nach dem Fleischklopfen. Geklopftes Frischfleisch trocknet auch leicht aus.

Ein weiterer Vorteil einer Walzvorrichtung gegenüber dem gängigen Fleischklopfen liegt im weitaus geringeren Zeit- und Kraftaufwand und der weitaus körperschonenderen Arbeitsweise bei der Fleischbearbeitung. Die beim gängigen Klopfvorgang z.T. überbeanspruchten Sehnen und Gelenke der klopfenden Person werden dabei auch geschont.

Aus der europäischen Patentanmeldung EP 00 121 256 ist in diesem Zusammenhang eine Fleischwalze bekannt, die einen Walzenmantel in der Form eines Zylinders und eine Vielzahl an Walzenzähnen auf der Oberfläche des Walzenmantels, die sich im Wesentlichen längs der Achse des Zylinders erstrecken, umfasst, wobei jeder der Vielzahl an Walzenzähnen jeweils eine erste Fläche, die im Wesentlichen auf einer Ebene durch die Achse des Zylinders liegt, und eine zweite Fläche, die im Wesentlichen senkrecht zu einer ersten Fläche eines in Umfangsrichtung benachbarten Walzenzahns angeordnet ist, aufweist. Aus den Patentschriften EP1090554 und US 6257132 ist eine Fleischwalze mit den Merkmalen des Oberbegriffs des Anspruchs 1 bekannt.

Die Aufgabe der vorliegenden Erfindung besteht somit darin, eine Vorrichtung vorzuschlagen, mit der die Mürbung von Fleischstücken wirkungsvoll durchzuführen ist und der Verlust an Zellflüssigkeit bei der Bearbeitung möglichst gering gehalten wird.

Erfindungsgemäß wird diese Aufgabe gelöst durch eine Fleischwalzenvorrichtung mit mindestens zwei Walzeneinrichtungen mit jeweils mindestens zwei parallelen Walzen, wobei die mindestens zwei Walzeneinrichtungen unter Bildung eines Spalts, durch den ein zu bearbeitendes Fleischstück förderbar ist, einander gegenüberstehen, und Bearbeitungszähnen auf der Oberfläche der Walzeneinrichtungen, die sich im Wesentlichen parallel zu den Walzenachsen erstrecken, und die jeweils eine erste Fläche und eine zweite Fläche aufweisen, wobei die erste Fläche jedes Bearbeitungszahns im Wesentlichen senkrecht zu der zweiten Fläche eines in Umfangsrichtung benachbarten Bearbeitungszahns angeordnet ist.

Ferner ist erfindungsgemäß vorgesehen ein Verfahren zum Mürben von Fleisch mit einer Fleischwalzenvorrichtung nach einem der Ansprüche 1 bis 14 durch portionsweises Erfassen eines zu bearbeitenden Fleischstücks durch eine Zahnkante der mit Bearbeitungszähnen versehenen Walzeneinrichtung, Drücken der erfassten Fleischportion durch eine Zahnseite, die an die Zahnkante angrenzt, und Dehnen der gedrückten Fleischportion durch Einhaken mittels der Zahnkante.

Durch die erfindungsgemäße Ausbildung der Bearbeitungszähne auf den Walzeneinrichtungen werden die Fleischstücke portionsweise in den Spalt eingezogen. In dem Spalt fließt das Fleisch entsprechend dem aufgebrachten Druck quer zur Bearbeitungsrichtung, d.h. in axialer Richtung der Walzen, auseinander. Beim Verlassen des Spalts wird das Fleisch durch die Bearbeitungszähne, die dort auseinander gehen und Widerhaken bilden, auseinandergezogen, wodurch das Fleischstück weiter gemürbt wird.

Die Bearbeitungszähne können einteilig mit der jeweiligen Walze verbunden sein. Es besteht aber auch die Möglichkeit, dass die Bearbeitungszähne an der Oberfläche eines Bearbeitungsriemens, der die Walzen einer Walzeneinrichtung umspannt, angeordnet sind. Im letzteren Fall sind die Walzen lediglich als Führungsrollen für den Bearbeitungsriemen ausgestaltet. Dieser hat den Vorteil, dass er leichter als die mehreren Walzen ausgetauscht werden kann.

In vorteilhafter Weise umfasst jede Walzeneinrichtung jeweils drei oder mehr Walzen, die zueinander linear angeordnet sind. Dadurch sind im Wesentlichen drei Walzenpaare gebildet, mit denen der Walzvorgang schonender als mit einem einzigen Walzenpaar durchgeführt werden kann.

Der von den Walzen gebildete Spalt ist günstigerweise variabel einstellbar. Dadurch können verschiedenartige Fleischstücke wie Rouladen und Schnitzel mit gleicher Wirksamkeit bearbeitet werden.

Vorzugsweise ist der Spalt etwas V-förmig gestaltet. Damit behalten auch die in der Walzenkette am Ende angeordneten Walzen beziehungsweise Walzenpaare ihre vorgesehene Wirkung, da das Fleischstück nach jedem Walzvorgang geringfügig dünner wird.

Der Anpressdruck der Walzeinrichtungen zueinander kann einstellbar sein. Dadurch kann den unterschiedlichen Fleischsorten Rechnung getragen werden.

Eine Umhüllung kann jede der Walzeneinrichtungen vorzugsweise mit einem vordefinierten oder einstellbaren Spiel umgeben. Dadurch kann gesteuert werden, wie weit das Fleischstück beim Walzvorgang um eine Walze gezogen wird. Mit der Umhüllung lässt sich auch beeinflussen, in welchem Maß die Struktur des Fleisches durch Ziehen zerstört beziehungsweise verändert wird. Die Umhüllung kann eine Kunststofffolie und/oder ein Textilmaterial aufweisen. Sie hat den Vorteil, dass die Zähne bei der Bearbeitung nicht durch abgerissene Fleischstückchen zugelegt werden. Dies verbessert letztlich die Bearbeitungsqualität und vermindert den Reinigungsaufwand.

Sämtliche Walzen werden vorteilhafterweise eigens angetrieben. Dies bewirkt, dass das zu behandelnde Fleisch gleichmäßig durch die Fleischwalzenvorrichtung gefördert wird und die gegebenenfalls eingesetzte Umhüllung eine längere Lebensdauer erhält.

Gewisse Vorteile ergeben sich auch, wenn die Vielzahl an Bearbeitungs- beziehungsweise Walzenzähnen gleichmäßig am Umfang des Walzenmantels mit oder ohne Zwischenraum angeordnet sind. Ferner können sich die Walzenzähne über die gesamte Mantellänge oder lediglich einen Teil davon erstrecken und die Walzenzähne vorzugsweise einteilig aus dem Walzenkörper gebildet sein. Darüber hinaus sind die bezüglich der Bearbeitung gegenüberstehenden Fleischwalzen hinsichtlich der Walzenzähne günstigerweise im Wesentlichen identisch und antiparallel angeordnet.

Zur Herstellung einer ansehnlichen Oberfläche der bearbeiteten Fleischstücke werden diese am Ende der Bearbeitung günstigerweise geglättet. Dies erfolgt entweder dadurch, dass das bearbeitete Fleischstück rückwärts unter Umkehrung der Bearbeitungsrichtung aus dem Walzenspalt gefördert wird. Alternativ besteht die Möglichkeit, dass glättende Walzen oder Walzeneinrichtungen mit glättenden Bearbeitungsriemen mit oder ohne Zähnen am Ende des Bearbeitungsspalts angeordnet werden, so dass die Bearbeitungsrichtung nicht umgekehrt werden muss.

Die beigefügten Zeichnungen dienen zur näheren Erläuterung der Erfindung. In ihnen zeigen:
- Fig 1: eine perspektivische Ansicht auf eine Fleischwalzenvorrichtung;
- Fig 2: eine Seitenansicht der Fleischwalzenvorrichtung;
- Fig 3: eine Teilquerschnittsansicht der Fleischwalzenvorrichtung;
- Fig 4: einen Querschnitt durch eine Fleischwalze;
- Fig 5: eine Querschnittsskizze durch eine erfindungsgemäße Fleischwalzenvorrichtung; und
- Fig. 6: eine Querschnittsskizze durch eine alternative Fleischwalzenvorrichtung.

Die Erfindung wird nun anhand bevorzugter Ausführungsformen näher erläutert.

Zunächst wird jedoch eine Fleischwalzenvorrichtung nach dem Stand der Technik zur besseren Erläuterung der Erfindung dargestellt.

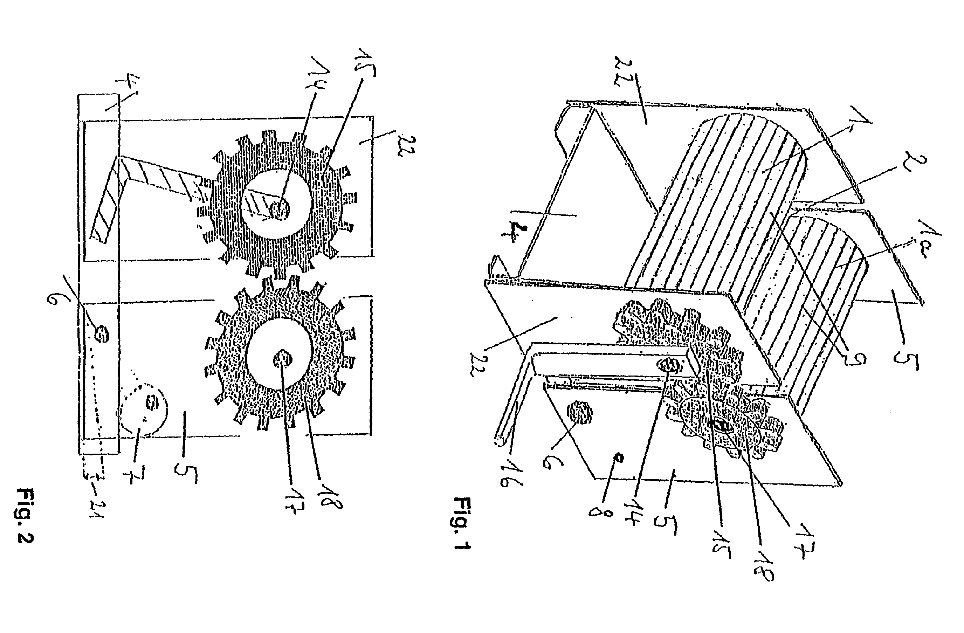

Gemäß Fig 1 umfasst eine Vorrichtung nach dem Stand der Technik zwei parallel gegenüberliegendem, gezahnte Walzen 1, 1 a, wobei zwischen beiden Walzen ein verschieden breiter Walzenspalt 2 einstellbar ist. Der gewünschte Anpressdruck der Walzen auf das Frischfleisch wird durch eine Veränderung der Breite des Walzenspaltes 2 geregelt. Gegebenenfalls werden hierzu entsprechend Federungseinrichtungen verwendet.

Beide Walzen sind in den entsprechenden Seitenteilen beidseitig mit Gleitlagern gelagert 20. Ein Seitenteilpaar 22 ist an der Bodenplatte 4 starr fixiert. An diesem Seitenteilpaar 22 ist die feste Walze 1 gelagert. Die parallel zur festen Walze 1 angeordnete passive Walze 1 a wird über die Walze 1 angetrieben. Ein Seitenteilpaar 5, zwischen dem sich die passive Walze 1 a befindet, ist beweglich durch Lagerbolzen 6 an der Bodenplatte 4 befestigt.

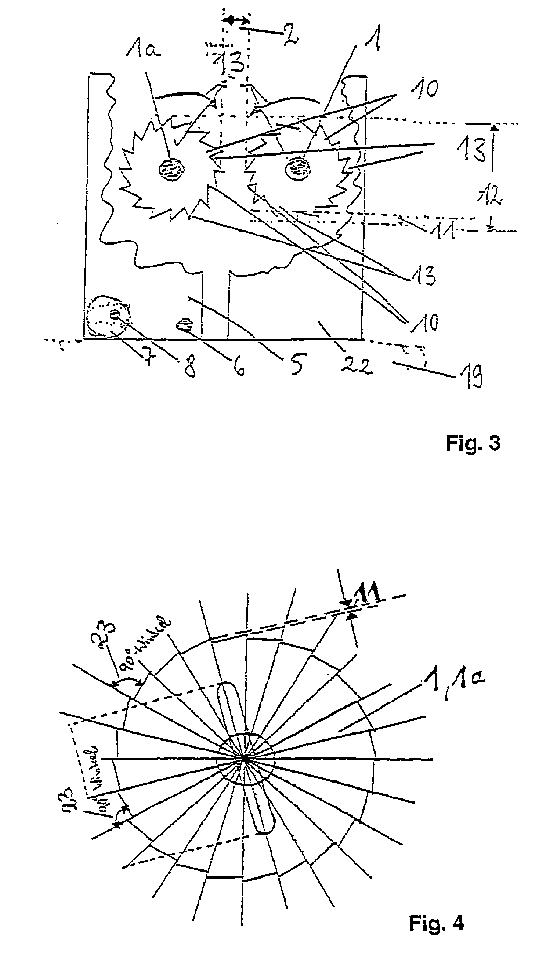

Eine Höhenneigung 21 dieses gelagerten Seitenteilpaares 5 wird gemäß Fig 2 durch Exzenterwalzen 7 erreicht, welche an einer durchgehenden Welle 8 angebracht sind. Durch Drehen an einem seitlichen Sternrad werden über die Exzenterwalzen 7 die Seitenteile 5 parallel in ihrer Höhenneigung 21 verändert. Dadurch wird der Walzenspalt 2 in seiner Breite verändert. Beide Walzen sind jeweils nur in Längsrichtung der Walze gezahnt 9. Die Zahnung 10 der Walzen gemäß Fig 3 verläuft entsprechend ihrer Drehrichtung 13 gleich. Als Zahntiefe 11 ist vertikal ein Standardmaß von 0,8 - 4 mm vorgesehen. Auch kleinere und größere Zahntiefen sind denkbar.

Ein Walzenzahn zum in Umfangsrichtung nächsten Walzenzahn 23 ergibt gemäß Fig 4 einen 90°-Winkel (plus oder minus 5° Abweichung). Die Zahnflächen können auch gewölbt sein, was durch eine entsprechende Form des Fräswerkzeugs für die Walze erreicht werden kann.

Die Walzenzähne 10 erfassen durch das gegenläufige Bewegen der Walzen das zu bearbeitende Frischfleisch und bewegen es, gleichsam der Wirkung einer Harpune, sicher in den Walzenspalt 2. Dadurch wird der Einzug des Walzgutes problemlos ermöglicht. Die Anzahl der Walzenzähne pro Walze ist abhängig vom jeweils gewählten Walzendurchmesser. Bei z.B. 10 cm Walzendurchmesser 12 beträgt die Zahnmenge ca. 20 - 25 Stück. Beide Walzen werden beim Arbeitsvorgang zueinander gegenläufig bewegt 13. Die Walzenzähne schauen dabei gegeneinander 10. Durch die entsprechende Ausbildung der Walzenzähne und dadurch, dass die Walzenzähne nur in einer Richtung gezahnt sind 10, können sich Fleischstücke auch nicht festhängen und die Fleischstücke können sich auch nicht aufstauen. Damit ist auch eine effektive Oberflächenvergrößerung des bearbeiteten Frischfleisches möglich, weil das Walzgut in den Rillen der Walzenzähne "auseinander fließen" kann. Bei diesem Walzvorgang wird das bearbeitete Frischfleisch durch den Walzenspalt 2 "durchgewalkt". Durch diesen Arbeitsvorgang wird die Struktur des Frischfleisches auch aufgelockert beziehungsweise gemürbt. Der erfindungsgemäße Vorteil der Vorrichtung ergibt sich insbesondere durch die spezielle Ausführung der Walzenform 1, 1 a, 9, 10, 11,13 und 23.

Die Achse 14 der fixen Walze 1 besitzt an der einen Außenseite der Seitenwand ein Antriebszahnrad 15. Über ein Verbindung/Zwischenstück von dem Antriebszahnrad 15 zu dem eigentlichen Antrieb wird die Vorrichtung angetrieben. Der Antrieb kann sowohl mechanisch, z.B. mit einer Kurbel 16, oder auch elektrisch erfolgen.

Auf der Achse 17 der passiven Walze 1 a sitzt an der selben Außenseite der Seitenwand 5 der Vorrichtung ebenfalls ein Zahnrad 18, welches vom Antriebszahnrad angetrieben wird. Der Bewegungsverlauf beider Zahnräder ist dadurch in der Drehrichtung gegenläufig. Die Gesamtvorrichtung wird am Unterboden 19 befestigt, z.B. über Saugnäpfe, Klemmen, Schrauben und ähnliches Befestigungsmaterial.

Sämtliche verwendeten Materialien, aus welchen die Vorrichtung konstruiert ist, bestehen aus lebensmitteltauglichen Materialien. Die Vorrichtung lässt sich leicht demontieren und reinigen.

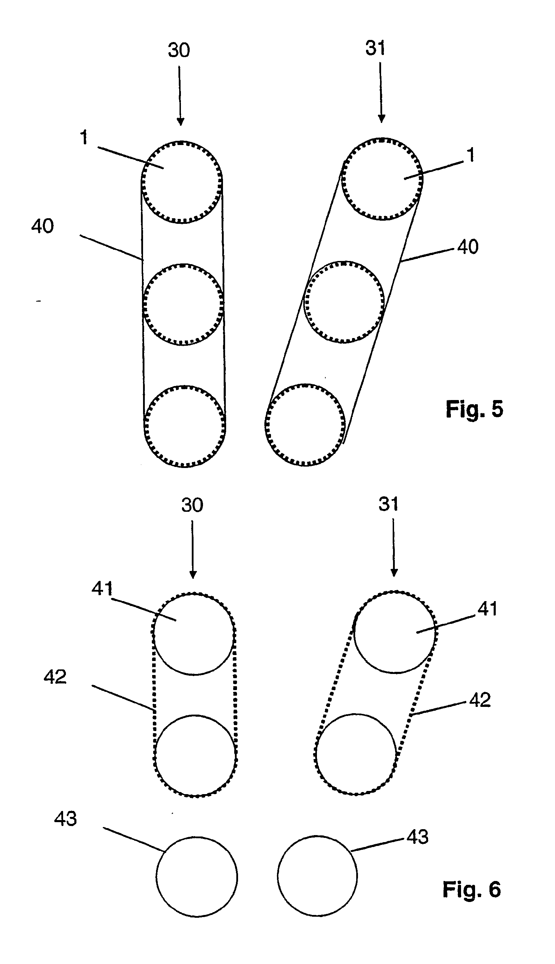

In Fig 5 ist nun eine Fleischwalzenvorrichtung gemäß der vorliegenden Erfindung dargestellt. Die einzelnen Komponenten entsprechen dabei im Wesentlichen denen, die im Zusammenhang mit den Figuren 1 bis 4 beschrieben sind, so dass eine detailliertere Beschreibung hier unterbleiben kann.

Die Fleischwalzenvorrichtung gemäß Fig 5 umfasst zwei Walzeneinrichtungen 30 und 31. Jede besitzt jeweils drei Walzen 1. Eine bandartige Umhüllung 40 läuft über sämtliche Walzen 1 einer jeden Walzeneinrichtung 30 und 31.

Die beiden Walzeneinrichtungen 30 und 31 sind V-förmig angeordnet. Der Winkel zueinander ist variabel. Darüber hinaus ist auch der Abstand zwischen beiden Walzeneinrichtungen 30 und 31 variabel einstellbar. Im vorliegenden Beispiel ist die Walzeneinrichtung 30 starr, während die Walzeneinrichtung 31 beweglich ist.

Die einzelnen Walzen 1 besitzen Zähne gemäß Fig 4. Es ist aber auch möglich, die einzelnen Walzen mit unterschiedlichen oder keinen Zähnen auszustatten, so dass beispielsweise bei einem Walzenvorgang lediglich eine Seite des Fleischstückes bearbeitet wird.

In Fig 5 sind pro Walzeneinrichtung 30 und 31 drei Walzen 1 dargestellt. Die Anzahl der Walzen kann aber auch auf zwei reduziert oder auf vier, fünf usw. pro Walzeneinrichtung erhöht werden. Darüber hinaus müssen sich die Walzen nicht zwangsläufig in den Walzeneinrichtungen paarweise gegenüberstehen. Sie können auch versetzt angeordnet sein, so dass das Fleischstück S-förmig durch die Walzenvorrichtung gefördert wird. Ferner können in einer Walzeneinrichtung zwei Walzen und in der anderen Walzeneinrichtung lediglich eine Walze vorgesehen sein.

Sämtliche Walzen 1 sind in dem Ausführungsbeispiel durch ein nicht dargestelltes Getriebe miteinander verbunden und angetrieben. Prinzipiell müssen aber nicht alle Walzen angetrieben werden. Der Antrieb kann auch hier per Hand oder mit Hilfe eines Motors erfolgen.

Gemäß Fig 5 ist die Fleischwalzenvorrichtung vertikal angeordnet. Sie kann in einer Fleischverarbeitungsanlage aber auch horizontal eingebaut sein, um beispielsweise Fleischstücke von einem Förderband abzunehmen.

Zur Glättung des bearbeiteten Fleischstücks kann die jeweils unterster Walze jeder Walzeneinrichtung 30, 31 mit gegenüber den anderen Walzen entgegengesetzt gerichteter Zahnausrichtung ausgestattet sein. Diese Walzen können jedoch auch ohne Bearbeitungszähne ausgebildet sein.

Die Ausrichtung der Walzenzähne und die Drehrichtung der Walzen zumindest der beiden oberen Walzenpaare von Fig 5 entspricht der von Fig 3.

In Fig 6 ist eine alternative, erfindungsgemäße Fleischwalzenvorrichtung im Querschnitt dargestellt. In diesem Fall umfasst jede Walzeneinrichtung 30, 31 jeweils zwei Walzen 41, die lediglich als Führungsrollen ausgestaltet sind. Über sie läuft ein Bearbeitungsriemen 42, der im Wesentlichen die gleichen, wie in Fig 4 dargestellten Zähne aufweist.

Die Ausrichtung der Zähne von hinsichtlich dem Bearbeitungsspalt gegenüberstehenden Walzen entspricht der von Fig 3.

Den Walzeneinrichtungen 30, 31 ist ein Glättungswalzenpaar mit den Walzen 43 nachgeschaltet. Bei dieser Ausführungsform besitzen die Glättungswalzen 43 keine Bearbeitungszähne.

Es sind beliebige Kombinationen der im Zusammenhang mit den Figuren 5 und 6 dargestellten Walzen und Walzenanordnungen denkbar. Auch ist die Fleischwalzenvorrichtung nicht auf drei Walzenpaare beschränkt.

## Patentansprüche

1. Fleischwalzenvorrichtung mit
mindestens zwei Walzeneinrichtungen (30, 31) mit jeweils mindestens zwei parallelen Walzen (1), wobei die mindestens zwei Walzeneinrichtungen (30, 31) unter Bildung eines Spalts, durch den ein zu bearbeitendes Fleischstück förderbar ist, einander gegenüberstehen, und mit
Bearbeitungszähnen auf der Oberfläche der Walzeneinrichtungen, die sich im Wesentlichen-parallel zu den Walzenachsen erstrecken, und die jeweils eine erste Fläche und eine zweite Fläche aufweisen, wobei die erste Fläche eines Bearbeitungszahns im Wesentlichen senkrecht zu der zweiten Fläche eines in Umfangsrichtung benachbarten Bearbeitungszahns angeordnet ist, **dadurch gekennzeichnet dass** je eine bandartig gestaltete Umhüllung (40) jede Walzeneinrichtung (30, 31) an deren Außenumfang umgibt.

2. Fleischwalzenvorrichtung nach Anspruch 1, wobei die bandartig gestaltete Umhüllung (40) eine Kunststofffolie und/oder ein Textilmaterial aufweist.

3. Fleischwaizenvorrichtung nach Anspruch 1 oder 2, wobei die Bearbeitungszähne einteilig mit der jeweiligen Walze verbunden sind.

4. Fleischwalzenvorrichtung nach Anspruch 1 oder 2, wobei die Bearbeitungszähne an der Oberfläche eines Bearbeitungsriemens (42), der die Walzen einer Walzeneinrichtung umspannt, angeordnet sind.

5. Fleischwalzenvorrichtung nach einem der Ansprüche 1 bis 4, wobei jede Walzeneinrichtung (30, 31) jeweils drei oder mehr Walzen (1) umfasst, die zueinander linear angeordnet sind.

6. Fleischwalzenvorrichtung nach einem der Ansprüche 1 bis 5, wobei der Spalt zwischen den Walzeneinrichtungen (30, 31) variabel ist.

7. Fleischwalzenvorrichtung nach einem der Ansprüche 1 bis 6, wobei der Spalt zwischen den Walzeneinrichtungen (30, 31) im Wesentlichen V-förmig ist.

8. Fleischwalzenvorrichtung nach einem der Ansprüche 2 bis 7, wobei jede Umhüllung (40) die jeweilige Walzeneinrichtung (30, 31) mit einem vorgegebenen oder einstellbaren Spiel umgibt.

9. Fleischwalzenvorrichtung nach einem der Ansprüche 1 bis 8, wobei der Anpressdruck der Walzeneinrichtungen (30, 31) zueinander einstellbar ist.

10. Fleischwalzenvorrichtung nach einem der Ansprüche 1 bis 9, wobei sämtliche Walzen (1) angetrieben sind.

11. Fleischwalzenvorrichtung nach einem der Ansprüche 1 bis 10, wobei jede Walzeneinrichtung (30,31) am Bearbeitungsende eine das zu bearbeitende Fleischstück glättende Walze aufweist.

12. Fleischwalzenvorrichtung nach einem der Ansprüche 1 bis 10, wobei den Walzeneinrichtungen (30,31) am Bearbeitungsende ein das zu bearbeitende Fleischstück glättendes Walzenpaar (43) oder eine glättende Walzeneinrichtung mit mindestens einem glättenden Bearbeitungsriemen nachgeschaltet ist.

13. Fleischwalzenvorrichtung nach einem der Ansprüche 1 bis 10, wobei die Walzeneinrichtungen für eine Glättung des zu bearbeitenden Fleischstücks zur Umkehrung der Bearbeitungsrichtung ansteuerbar sind.

14. Verfahren zum Mürben von Fleisch mit einer Fleischwalzenvorrichtung nach einem der Ansprüche 1 bis 13
**gekennzeichnet durch**
portionsweises Erfassen eines zu bearbeitenden Fleischstücks **durch** eine Zahnkante der mit Bearbeitungszähnen versehenen Walzeneinrichtung (30, 31),
Drücken der erfassten Fleischportion **durch** eine Zahnseite, die an die Zahnkante angrenzt, und
Dehnen der gedrückten Fleischportion **durch** Einhaken mittels der Zahnkante und Steuern des Dehnens **durch** Einstellen des Spiels der Umhüllung (40) um die Walzeneinrichtung.

## Claims

1. A meat rolling device comprising
at least two rolling means (30, 31) each having at least two parallel rollers (1), wherein the at least two rolling means (30, 31) with formation of a gap through which a piece of meat to be processed can be conveyed, and comprising
processing teeth on the surface of the rolling means extending substantially parallel to roller axes of the rollers and having a first surface and a second surface each, wherein the first surface of a processing tooth is disposed substantially perpendicularly to the second surface of a processing tooth adjacent in a circumferential direction,
**characterized in that**
a band-like configured envelope (40) respectively surrounds each rolling means (30, 31) on an outer circumference thereof.

2. A meat rolling device according to claim 1, wherein the band-like configured envelope (40) has a plastic sheet and/or a textile material.

3. A meat rolling device according to claim 1 or 2, wherein the processing teeth are integrally connected to the respective roller.

4. A meat rolling device according to claim 1 or 2, wherein the processing teeth are disposed on the surface of a processing belt (42) spanning the rollers of at least one of the rolling means.

5. A meat rolling device according to one of claims 1 to 4, wherein each rolling means (30, 31) comprises three or more rollers (1) arranged linearly with respect to each other.

6. A meat rolling device according to one of claims 1 to 5, wherein the gap between the rolling means (30, 31) is variable.

7. A meat rolling device according to one of claims 1 to 6, wherein the gap between the rolling means (30, 31) is substantially V-shaped.

8. A meat rolling device according to one of claims 2 to 7, wherein each envelope (40) surrounds the respective rolling means (30, 31) with a preset or adjustable backlash.

9. A meat rolling device according to one of claims 1 to 8, wherein the contact pressure of the rolling means (30, 31) to each other is adjustable.

10. A meat rolling device according to one of claims 1 to 9, wherein all of the rollers (1) are driven.

11. A meat rolling device according to one of claims 1 to 10, wherein each rolling means (30, 31) has a roller smoothing the piece of meat to be processed at the processing end.

12. A meat rolling device according to one of claims 1 to 10, wherein the rolling means (30, 31) are followed by a smoothing roller pair (43) or a smoothing rolling means comprising at least one smoothing processing belt at the processing end.

13. A meat rolling device according to one of the claims 1 to 10, wherein the rolling means can be driven for reversing the processing direction for smoothing the piece of meat to be processed.

14. A method for tendering meat using a meat rolling device according to one of claims 1 to 13,
**characterized by**
portion-wise gripping of a piece of meat to be processed by a tooth edge of the rolling means (30, 31) equipped with processing teeth,
pressing the gripped portion of meat by a tooth side adjoining the tooth edge, and
stretching the pressed portion of meat by hooking-in with the tooth edge and controlling the stretching by adjusting the backlash of the envelope (40) around the rolling means.

## Revendications

1. Ensemble de laminage pour la viande comportant
au moins deux dispositifs de laminage (30, 31) composés chaque fois d'au moins deux cylindres de laminage parallèles (1), les au moins deux dispositifs de laminage (30, 31) figurant l'un en face de l'autre en formant une fente à travers laquelle un morceau de viande à traiter peut être transporté, et comportant
des dents de traitement à la surface des dispositifs de laminage s'étendant, pour l'essentiel, parallèlement aux axes des cylindres de laminage et qui présentent chaque fois une première surface et une deuxième surface, la première surface d'une dent de traitement étant disposée, pour l'essentiel, perpendiculairement à la deuxième surface d'une dent de traitement voisine en direction de la périphérie,
**caractérisé en ce que**
pour chacun, un gainage sous forme de bande (40) entoure chaque dispositif de laminage (30, 31) sur sa périphérie extérieure.

2. Ensemble de laminage pour la viande selon la revendication 1, où le gainage sous forme de bande (40) présente un film en matériau synthétique et/ou un matériau textile.

3. Ensemble de laminage pour la viande selon la revendication 1 ou 2, où les dents de traitement sont reliées de façon monobloc avec le cylindre correspondant.

4. Ensemble de laminage pour la viande selon la revendication 1 ou 2, où les dents de traitement sont disposées à la surface d'une courroie de traitement (42) entourant les cylindres d'un dispositif de laminage.

5. Ensemble de laminage pour la viande selon l'une quelconque des revendications 1 à 4, où chaque dispositif de laminage (30, 31) comprend trois cylindres (1) ou plus disposés de façon linéaire les uns par rapport aux autres.

6. Ensemble de laminage pour la viande selon l'une quelconque des revendications 1 à 5, où la fente entre les dispositifs de laminage (30, 31) peut varier.

7. Ensemble de laminage pour la viande selon l'une quelconque des revendications 1 à 6, où la fente entre les dispositifs de laminage (30, 31) est, pour l'essentiel, en forme de V.

8. Ensemble de laminage pour la viande selon l'une quelconque des revendications 2 à 7, où chaque gainage (40) entoure le dispositif de laminage (30, 31) correspondant avec un jeu imposé ou réglable.

9. Ensemble de laminage pour la viande selon l'une quelconque des revendications 1 à 8, où la pression d'application des dispositifs de laminage (30, 31) l'un contre l'autre est réglable.

10. Ensemble de laminage pour la viande selon l'une quelconque des revendications 1 à 9, où chacun des cylindres (1) est entraîné.

11. Ensemble de laminage pour la viande selon l'une quelconque des revendications 1 à 10, où chaque dispositif de laminage (30, 31) présente en fin de traitement un cylindre lissant le morceau à traiter.

12. Ensemble de laminage pour la viande selon l'une quelconque des revendications 1 à 10, où, après les dispositifs de laminage (30, 31), est raccordé en fin de traitement une paire de cylindres (43) lissant le morceau à traiter ou un dispositif de laminage lissant qui comporte au moins une courroie lissante de traitement.

13. Ensemble de laminage pour la viande selon l'une quelconque des revendications 1 à 10, où le dispositif de laminage pour lissage du morceau de viande à traiter peut être commandé pour inverser le sens du traitement.

14. Procédé d'attendrissement de la viande par un ensemble de laminage pour la viande selon l'une quelconque des revendications 1 à 13,
**caractérisé par**
une saisie par portion d'un morceau de viande à traiter par une arête de dent du dispositif de laminage (30, 31) pourvu de dents de traitement,
la poussée de la portion de viande par un côté de dent qui jouxte l'arête de dent, et
l'extension de la portion de viande poussée par crochetage au moyen de l'arête de dent et la commande de l'extension par le réglage du jeu du gainage (40) autour du dispositif de laminage.
